# EUROPÄISCHE PATENTANMELDUNG

(11) **EP 4 280 710 A2**
(43) Veröffentlichungstag der Anmeldung: **22.11.2023**
(21) Anmeldenummer: 23201221.1
(22) Anmeldetag: 08.08.2014
(51) Int. Cl.: H04W 52/02

(54) **VERFAHREN ZUR ERMITTLUNG EINES GEEIGNETEN EMPFANGSKANALS EINES EMPFÄNGERSYSTEMS SOWIE ENTSPRECHENDES EMPFÄNGERSYSTEM**

(30) Priorität: 09.08.2013 DE 102013108660; 09.08.2013 DE 102013108654
(62) Teilanmeldung aus: 19214839.3
(71) Anmelder: EnOcean GmbH, 82041 Oberhaching (DE)
(72) Erfinder: Schmidt, Frank, 81829 München (DE)
(74) Vertreter: Epping - Hermann - Fischer

(57) **Zusammenfassung**

Die Erfindung betrifft ein Verfahren zur Ermittlung eines geeigneten Empfangskanals eines Empfängersystems. Das Verfahren umfasst die Schritte:
a.) Hinterlegen von wenigstens zwei Empfangskanälen in einem vorbestimmten Frequenzbereich in einem Empfängersystem,
b.) Voreinstellen einer Empfangseinheit des Empfängersystems auf einen bevorzugten hinterlegten Empfangskanal,
c.) Ermitteln einer statistischen Belegwahrscheinlichkeit der hinterlegten Empfangskanäle anhand eines wiederholten Prüfens eines Empfangssignalpegels eines jeden hinterlegten Empfangskanals, sowie
d.) Auswahl eines hinterlegten Empfangskanals mit der niedrigsten Belegwahrscheinlichkeit als bevorzugter Empfangskanal.

## Beschreibung

Die Erfindung betrifft Anordnung mit einem Empfängersystem und einem Funksystem gemäß Patentanspruch 1.

Sender bzw. Sendesysteme oder Funksysteme, speziell energieautarke Funksysteme, Sender bzw. Sendeanordnungen, senden nach dem Einlernen bzw. Initialisieren oder nach dem sogenannten "Pairing" mit entsprechenden Empfängersystemen in Funknetzwerken auf der eingelernten Frequenz bzw. dem eingelernten Sendekanal, unabhängig von der momentanen Umgebungssituation, d.h. unabhängig von der aktuellen Belegung der zur Verfügung stehenden Sendekanäle.

Dies kann nachteilig dazu führen, dass Funknachrichten der Funksysteme nicht mehr korrekt gesendet werden können, falls die Funksysteme auf Kanälen senden, die durch einen oder mehrere weitere Sender in der Umgebung belegt sind. In diesem Falle können Funktechnologien unterschiedlicher koexistierender Systeme kollidieren und zu negativen Interferenzen führen, die einen Datenaustausch von Systemkomponenten untereinander stören. Gerade bei gemeinsamer Verwendung von Funkstandards in Netzen, wie Bluetooth (IEEE 802.15.1), WLAN (IEEE 802.11) oder WPAN (802.15.4, z.B. Zigbee), die einen Frequenzbereich zwischen 2,4 GHz und 2,4835 GHz bedienen, kann es zu negativen Störeffekten kommen, falls eine Funkkommunikation verschiedener Systeme innerhalb gleicher Frequenzbänder durchgeführt wird.

In Umgebungen mit starkem Funkverkehr ist es auch für Empfängersysteme oft nachteilig, von einer starren Anzahl voreingestellter Empfangskanäle auszugehen. Falls diese Kanäle durch übermäßigen Funkverkehr stark belegt sind, kommt es zu einer Erhöhung der Störempfindlichkeit der Empfangssysteme, wobei Funknachrichten nicht mehr fehlerfrei oder unter Umständen gar nicht mehr empfangen werden können.

Zentral gesteuerte Systeme, wie z.B. Systeme, die das Übertragungsprotokoll "Zigbee" verwenden, können den einzelnen Teilnehmern feste Zeitfenster (sogenannte Time-Slots) zum Senden zuweisen und/oder den Teilnehmern andere, freie Frequenzen zuweisen. Auch generelle Anweisungen für einen kompletten Kanalwechsel sind denkbar.

Für energieautarke Funksysteme (Sender bzw.

Senderanordnungen) mit einem Energiewandler, welcher Umgebungsenergie in elektrische Betriebsenergie wandelt, ist dies jedoch üblicherweise nicht oder nur sehr mühsam möglich, da eine hierzu notwendige ständige oder länger anhaltende Empfangsbereitschaft zu energieintensiv ist.

Es ist daher eine Aufgabe der Erfindung, ein Verfahren der obigen Art und entsprechende Empfängersysteme vorzuschlagen, die insbesondere in Anordnungen mit energieautarken Funksystemen eine sicherere und störungsfreiere Übertragung von Funknachrichten ermöglichen.

Diese Aufgabe wird durch Anordnung mit einem Empfängersystem und einem Funksystem nach Anspruch 1 gelöst.

Die Anordnung weis ein Empfängersystem und ein Funksystem auf, wobei das Funksystem aufweist:
- einen Energiewandler zur Wandlung nichtelektrischer Primärenergie aus der Umgebung in elektrische Energie, wobei der Energiewandler durch eine mechanische Betätigung eines Betätigungselementes des Funksystems anregbar ist,
- eine Schalteinheit, welche eingerichtet ist, eine mechanische Betätigung des Betätigungselementes in ein logisches Signal umzuwandeln und daraus eine vorbestimmte Funknachricht zu generieren, sowie
- eine Sendeeinheit zum Senden der vorbestimmten Funknachricht auf einem oder mehreren im Funksystem hinterlegten Sendekanälen;
wobei das Empfängersystem einen Empfänger aufweist und eingerichtet ist, ein Verfahren mit den folgenden Schritten durchzuführen:

### a.) Hinterlegen von wenigstens zwei Empfangskanälen in einem vorbestimmten Frequenzbereich im Empfängersystem, b.)

Voreinstellen des Empfängers auf einen bevorzugten hinterlegten Empfangskanal und
wobei das Empfängersystem als Sende-Empfangs-System ausgeführt ist, das neben einem Empfangen einer Funknachricht auch ein Senden von Telegrammen auf einem (Rück-)Kanal zu dem sendenden Funksystem durchführen kann,
wobei das Empfängersystem eingerichtet ist, vermittels des (Rück-)Kanals Informationen über eine Kanalbelegung und/oder Kanal(aus-)wahl im Empfängersystem an das Funksystem zu übermitteln.

Diese Maßnahmen haben den Vorteil, dass auf Empfängerseite in einem Funknetz auf die Belegung, Auslastung und sich damit verändernde Störsicherheit der verwendeten Funkkanäle verbessert Rücksicht genommen werden kann. Insbesondere wird ausgehend von einem (wiederholten) Prüfen eines Empfangssignalpegels eines jeden hinterlegten Empfangskanals eine Kanalverfügbarkeit ermittelt. Diese Kanalverfügbarkeit kann z.B. eine statistische Belegwahrscheinlichkeit oder auch andere Maßzahlen umfassen. So können auch Parameter, wie Signal-Rausch-Abstände, Leistungsdichtespektren oder ähnliches herangezogen werden, um eine Kanalwahl auf Empfängerseite durchzuführen.

Vorteilhaft sind derartige Maßnahmen insbesondere bei Einsatz energieautarker Funksysteme als Sender, weil damit einhergehend auf Seiten der Empfängersysteme eine verbesserte Kanalwahl durchgeführt werden kann, ohne dass der Gegenseite (den sendenden Funksystemen) entsprechende Kanalwechsel mitgeteilt werden müssten.

Vorteilhaft korreliert eine Entscheidung über eine Kanalwahl auf Seiten eines sendenden Funksystems mit einer Entscheidung über eine Kanalwahl auf Seiten eines empfangenden Empfängersystems. Dadurch kann erreicht werden, dass ein Funksystem ausgehend von einer ermittelten Belegwahrscheinlichkeit und einem gegebenenfalls damit verbundenen Kanalwechsel einen bevorzugten Sendekanal auswählt, der auch auf Seiten eines entsprechenden Empfangssystems anhand der oben erläuterten Maßnahmen bevorzugt für einen Empfang herangezogen wird.

Der Begriff "Empfängersystem" soll im Zusammenhang mit oben erläutertem Verfahren ein System beschreiben, das als Sende-Empfangs-System ausgeführt ist, das also neben einem Empfangen einer Funknachricht auch ein Senden von Telegrammen auf einem (Rück-)Kanal durchführen kann, jedoch in seiner Funktion (vorrangig) zum Empfangen von Funknachrichten (d.h. in der Funktion eines Empfängers) eingesetzt wird. Dies kann z.B. eine Deckenbeleuchtung oder sonstige Empfängerautomatiken betreffen.

Ein Verfahren der obigen Art kann beispielsweise vermittels eines Empfängersystems mit nur einem Empfänger durchgeführt werden, wobei der Empfänger entsprechend den oben erläuterten Maßnahmen einen geeigneten Empfangskanal auswählt und bestimmt.

In diversen Implementierungen des Verfahrens wird für jeden hinterlegten Empfangskanal die Belegwahrscheinlichkeit mit einem vorgegebenen Gütekriterium verglichen und das Verfahren bei Ermittlung eines Empfangskanals mit einer Belegwahrscheinlichkeit, welche das vorgegebene Gütekriterium erfüllt, unmittelbar beendet, wobei dieser Empfangskanal als bevorzugter Empfangskanal gewählt wird.

In diversen Implementierungen des Verfahrens werden vermittels eines (Rück-)Kanals vom Empfängersystem zu einem sendenden Funksystem Informationen über eine Kanalbelegung und/oder Kanal(aus-)wahl im Empfängersystem an das Funksystem übermittelt. Dies hat den Vorteil, dass das sendende Funksystem eine Sendekanalwahl (siehe Erläuterungen weiter unten) anhand solcher Informationen und Kriterien abstimmen kann, wie sie gegenwärtig und/oder statistisch in einem Empfängersystem vorliegen.

In diversen Implementierungen des Verfahrens wird das Verfahren zu festen oder variablen Zeitpunkten, z.B. stündlich, wiederholt durchgeführt.

In diversen Implementierungen des Verfahrens werden einzelne der Schritte a.) bis d.) zu unterschiedlichen Zeiten bzw. nach unterschiedlich langen Zeitabschnitten durchgeführt. So könnte z.B. eine Prüfung einer Belegung eines Kanals stündlich durchgeführt werden, während eine tatsächliche Kanalwahl z.B. nur wöchentlich durchgeführt wird.

Nachfolgend wird ergänzend auf ein Verfahren zum Senden von Nachrichten eines energieautarken Funksystems Bezug genommen.

Bei diesem Verfahren wird eine elektrische Energie für das Funksystem durch einen Energiewandler bereitgestellt, der nichtelektrische Primärenergie aus der Umgebung in elektrische Energie wandelt.

Ferner umfasst das Verfahren die folgenden Schritte:
a.) Hinterlegen von wenigstens zwei Sendekanälen in einem vorbestimmten Frequenzbereich im Funksystem,
b.) Voreinstellen einer Sendeeinheit des Funksystems auf einen bevorzugten hinterlegten Sendekanal,
c.) Prüfen einer Belegung des bevorzugten Sendekanals durch andere Funksysteme,
d.) Wechsel vom bevorzugten Sendekanal auf einen anderen hinterlegten Sendekanal, falls der bevorzugte Sendekanal belegt ist, und
e.) Senden einer vorbestimmten Funknachricht durch die Sendeeinheit auf dem bevorzugten oder dem anderen Sendekanal in Abhängigkeit von Schritt d.).

Der Energiewandler wird durch eine mechanische Betätigung eines Betätigungselementes des Funksystems angeregt, wodurch elektrische Energie zur Durchführung des Verfahrens bereitgestellt wird. Vorteilhaft werden bei jeder Betätigung des Betätigungselementes zumindest die obigen Schritte c.) bis e.) durchgeführt.

Ein derartiges Verfahren hat den Vorteil, dass eine Flexibilität der Wahl eines Sendekanals erreicht ist, die es ermöglicht, auf eine Belegung eines bestimmten, zunächst eingestellten (bevorzugten) Sendekanals durch andere Funksysteme zu reagieren, indem ein Kanalwechsel durchgeführt wird.

Der Kanalwechsel wird vorteilhaft davon abhängig gemacht, ob eine Prüfung der Belegung des voreingestellten Sendekanals ergeben hat, dass dieser belegt ist. In diesem Falle wird auf einen anderen Kanal gewechselt. Anderenfalls wird der voreingestellte Kanal beibehalten.

Dieses Verfahren erlaubt auf einfache, aber effiziente Weise ein Handling eines Funkverkehrs bei koexistierenden Funksystemen, die insbesondere gleiche Frequenzbänder bzw. Sendekanäle innerhalb eines bestimmten Frequenzbereiches verwenden. Gerade für energieautarke Funksysteme der oben erläuterten Art, die eine Betriebsenergie durch einen eingebauten Energiewandler erzeugen, ist dieses Verfahren vorteilhaft. Funksysteme müssen nicht ständig oder länger anhaltend in einer Empfangsbereitschaft sein, um entsprechende Kanalanpassungen durchzuführen. Die Funksysteme passen gemäß den oben erläuterten Maßnahmen vielmehr von sich aus eine Kanalwahl an.

Eine mechanische Betätigung eines Betätigungselementes des Funksystems wird vorteilhaft derart an eine Anregung des verwendeten Energiewandlers angepasst, dass bereits durch eine einzige Betätigung des Betätigungselementes ausreichend elektrische Energie zur Durchführung ausgewählter oder sämtlicher oben erläuterter Verfahrensschritte bereitgestellt wird.

Der Begriff "Funksystem" soll im Zusammenhang mit oben erläutertem Verfahren ein System beschreiben, das als Sende-Empfangs-System ausgeführt ist, das also neben einem Senden einer Funknachricht auch ein Abhören eines Sendekanals durchführen kann, jedoch in seiner Funktion (vorrangig) zum Senden von Funknachrichten (d.h. in der Funktion eines Senders) eingesetzt wird. Dies kann z.B. einen Funklichtschalter oder sonstige Funkschaltautomatiken betreffen.

Vorteilhaft werden einer oder mehrere der obigen Schritte c.) bis e.) für den bevorzugten Sendekanal und/oder für zumindest einen weiteren hinterlegten Sendekanal wiederholt durchgeführt. Dadurch können unter Umständen mehrere Sendekanäle in mehreren Iterationen auf eine Belegung hin überprüft werden und/oder gegebenenfalls ein iterativer Wechsel auf einen anderen Sendekanal durchgeführt werden. Es ist auch möglich, auf mehreren Sendekanälen iterativ mehrere Funknachrichten zu senden. Dies hat den Vorteil, dass bei Störung bzw. Belegung eines oder mehrerer Sendekanäle Funknachrichten auf einem anderen Sendekanal an ein Empfangssystem gelangen, sodass trotz einer hohen Belegung im Übertragungsnetz ein Datenaustausch möglich ist.

Bevorzugt wird jeweils für einen hinterlegten Sendekanal anhand eines wiederholten Prüfens der Belegung gemäß obigem Schritt c.) eine statistische Belegwahrscheinlichkeit ermittelt. Vorteilhaft wird ein hinterlegter Sendekanal mit der niedrigsten Belegwahrscheinlichkeit als bevorzugter Sendekanal gemäß obigem Schritt b.) eingestellt. Diese Maßnahmen erlauben ein Einstellen eines bevorzugten Sendekanals in Abhängigkeit der ermittelten statistischen Belegwahrscheinlichkeit. Diese kann ggf. periodisch zu vorgegebenen Zeitpunkten für jeden hinterlegten Sendekanal ermittelt werden und gibt Auskunft über die Belegung eines entsprechenden Sendekanals. Durch die genannten Maßnahmen kann somit stets ein bevorzugter Sendekanal ermittelt werden, der statistisch der "freieste" Kanal mit der niedrigsten Belegwahrscheinlichkeit ist.

Alternativ zu einer Belegwahrscheinlichkeit können auch andere statistische Maßzahlen für eine allgemeine Ermittlung einer Störempfindlichkeit eines entsprechenden Sendekanals herangezogen werden. So können auch Parameter, wie Signal-Rausch-Abstände, Leistungsdichtespektren oder ähnliches herangezogen werden, um eine Sendekanalwahl durchzuführen.

Bevorzugt werden bei dem Verfahren der erläuterten Art hinterlegte Sendekanäle gelöscht, falls deren statistische Belegwahrscheinlichkeit einen vorbestimmten Grenzwert überschreitet.

Vorzugsweise wird alternativ oder ergänzend zu den obigen Maßnahmen für einen oder mehrere nicht-hinterlegte Sendekanäle anhand eines wiederholten Prüfens der Belegung eine statistische Belegwahrscheinlichkeit ermittelt. Diese Sendekanäle werden gemäß obigem Schritt a.) hinterlegt, falls deren statistische Belegwahrscheinlichkeit den vorbestimmten Grenzwert unterschreitet.

Anhand dieser Maßnahmen kann vorteilhaft eine dynamische Sendekanal-Anpassung sowie eine Anpassung der hinterlegten Sendekanäle durchgeführt werden. Falls ein oder mehrere hinterlegte Sendekanäle ein vorbestimmtes Kriterium nicht (mehr) erfüllen, können diese aus einer Liste hinterlegter Sendekanäle gelöscht werden. Umgekehrt können initial nicht-hinterlegte Sendekanäle in die Liste hinterlegter Sendekanäle aufgenommen werden, falls diese den vorgegebenen Kriterien entsprechen. Dadurch kann auch einer Veränderung eines verteilten Funknetzes und dessen Auslastung in eine Anpassung der Sendekanäle einbezogen werden.

Vorteilhaft wird das Verfahren der erläuterten Art in einem vorbestimmten Frequenzbereich mit Sendefrequenzen zwischen 2,4 GHz und 2,4835 GHz, z.B. gemäß dem IEEE 802.15.4 Standard, eingesetzt. In einem derartigen Frequenzband finden gängige Übertragungsprotokolle in entsprechenden Funknetzen häufige Anwendung. Alternativ oder ergänzend kann auch ein Frequenzbereich zwischen 5,725 GHz und 5,875 GHz berücksichtigt werden.

Vorteilhaft wird der Energiewandler durch eine mechanische Betätigung einer Schaltwippe als Betätigungselement des Funksystems elektrodynamisch angeregt, wobei dadurch die über die Schaltwippe eingebrachte mechanische Energie in elektrische Energie zur Versorgung des Funksystems gewandelt wird. Der Energiewandler ist vorteilhaft ein induktiv arbeitender Wandler, wobei durch eine relative Bewegung eines permanentmagnetischen Materials bezüglich einer Spule nach dem Induktionsgesetz elektrischer Strom in der Spule induziert wird und dadurch Betriebsenergie zum Betrieb des Funksystems bereitgestellt wird. Das Funksystem kann beispielsweise als Lichtschalter ausgeführt sein, welcher über die Schaltwippe betätigt wird. Aufgrund der Betätigung wird vermittels des Energiewandlers Betriebsenergie zur Verfügung gestellt, sodass das obige Verfahren eines Aussendens einer Funknachricht verbunden mit einer Kanalwahl durchgeführt werden kann.

In der Funknachricht kann beispielsweise ein Befehl zum Einschalten einer Lichtquelle kodiert sein, die mit einem entsprechenden Empfängersystem verbunden ist. Natürlich sind auch andere Befehle oder Anweisungen denkbar, wie EIN, AUS, DIMMEN, usw. Es ist auch denkbar andere Anwendungen vorzusehen. Beispielsweise könnte das Funksystem auch einen Sensor zur Detektion einer Fensterstellung umfassen, wobei durch Schließen oder Öffnen des Fensters eine mechanische Betätigung der Schaltwippe hervorgerufen wird. Ein entsprechendes Funksignal könnte dann z.B. an eine Heizungssteuerung zur Raumtemperaturregelung gesendet werden.

Gemäß einer Ausführungsform wird ein Auslöseelement des Energiewandlers vermittels der über die Schaltwippe eingebrachten mechanischen Energie betätigt. Das Auslöseelement kann im Falle einer induktiven Anregung des Energiewandlers beispielsweise einen Permanentmagneten oder eine Induktionsspule tragen, die eine Relativbewegung bezüglich des jeweils anderen Elementes (Permanentmagnet oder Spule) vollführen. Insbesondere kann das Auslöseelement derart gestaltet sein, dass keine großen Relativbewegungen und/oder Betätigungskräfte zur Anregung des Energiewandlers notwendig sind. Beispielsweise wird das Auslöseelement bei einer Betätigungskraft zwischen 3 und 15 N über einen Betätigungsweg zwischen 0,5 mm und 10 mm bei Raumtemperatur betätigt. Beispielsweise wird das Auslöseelement in einer möglichen Ausführung des Funksystems bei einer Betätigungskraft zwischen 5 und 10 N über einen Betätigungsweg zwischen 1 mm und 3 mm bei Raumtemperatur betätigt. Dies entspricht einer herkömmlichen Betätigung eines Schalters und ist ausreichend, um über den Energiewandler genügend Betriebsenergie zu erzeugen, sodass das obige Verfahren durchgeführt werden kann.

Vorteilhaft ist im Funksystem eine Identifikationsnummer zur Identifikation des Funksystems hinterlegt. Bevorzugt wird die Identifikationsnummer mit jedem Senden einer Funknachricht durch die Sendeeinheit gemäß obigem Schritt e.) ausgesendet.

In der Funknachricht können neben Identifikationsparametern des Funksystems selbst, wie z.B. einer unterscheidbaren (u.U. werksseitig vorgegebenen) Geräte-ID, und/oder einer Anweisung für ein Empfängersystem auch andere Informationen kodiert sein. Diese anderen Informationen können beispielsweise auch Informationen über die hinterlegten Sendekanäle und deren Eigenschaften, wie Störempfindlichkeit,
Belegwahrscheinlichkeit, usw. betreffen.

Ein entsprechendes Funksystem umfasst einen Energiewandler zur Wandlung nichtelektrischer Primärenergie aus der Umgebung in elektrische Energie. Der Energiewandler ist durch eine mechanische Betätigung eines Betätigungselementes des Funksystems anregbar.

Ferner umfasst das Funksystem eine Schalteinheit, welche eingerichtet ist, eine mechanische Betätigung des Betätigungselementes in ein logisches Signal umzuwandeln und daraus eine vorbestimmte Funknachricht zu generieren.

Zusätzlich umfasst das Funksystem eine Sendeeinheit zum Senden der vorbestimmten Funknachricht auf einem oder mehreren im Funksystem hinterlegten Sendekanälen.

Vorteilhaft ist das Funksystem eingerichtet, ein Verfahren gemäß der oben erläuterten Art durchzuführen.

Das Funksystem kann derart ausgestaltet sein, dass unterschiedliche Bedienoperationen und/oder Betriebsmodi erkennbar und kodierbar sind. Beispielsweise kann die Schalteinheit derart eingerichtet sein, dass unterschiedliche Kontaktstellen durch das Betätigungselement in unterschiedlicher Art und Weise zum Schließen eines elektrischen Kontaktes mit einer Platine führen, sodass unterschiedliche logische Signale erzeugt werden. Diese logischen Signale können dann jeweils einer separaten Bedienoption oder einem separaten Betriebszustand zugewiesen sein. Es ist beispielsweise denkbar, vier Kontaktzungen, jeweils eine in einem Quadranten an der Schalteinheit vorzusehen, wobei die Kontaktzungen durch Wipp-Bewegungen nach oben oder unten verbunden mit einem Drücken auf der rechten oder linken Seite der Schaltwippe kontaktiert werden können und so vier unterschiedliche Bedienoptionen kodierbar sind. Es ist auch denkbar, mehr als eine Schaltwippe vorzusehen. Auf diese Weise ist eine Vielzahl an unterschiedlichen Betriebszuständen kodierbar und durch das Funkmodul steuerbar.

Zusätzlich kann - wie oben erläutert - auch eine iterative Durchführung der einzelnen Verfahrensschritte auf beiden Seiten (sendendes Funksystem sowie Empfängersystem) für unterschiedliche Kanäle durchgeführt werden, sodass trotz unterschiedlicher bevorzugter Kanäle Funknachrichten auf mehreren Kanälen übertragen werden und sich die Wahrscheinlichkeit erhöht, dass eine Funknachricht erfolgreich übertragen wird, selbst wenn bevorzugte Kanäle auf beiden Seiten (Sender und Empfänger) unterschiedlich ausgewählt sind.

In einem weiteren Aspekt wird die obige Aufgabe durch ein Empfängersystem gelöst.

Das Empfängersystem umfasst einen Empfänger und eine Logikeinheit. Der Empfänger ist dabei vorteilhaft ausgebildet, (breitbandig) gleichzeitig auf allen hinterlegten Empfangskanälen zu empfangen. Der Empfänger kann beispielsweise in Form eines digitalen Signalprozessors (DSP) ausgeführt sein, der das Signal breitbandig mit einer sehr hohen Signalabtastung unter Einhaltung des Abtastkriteriums zur vollständigen Signalwiedergewinnung abtastet. Über digitale Filter (Bandpässe) können dann für die unterschiedlichen Kanäle die einzelnen Funknachrichten gefiltert und dekodiert werden.

Alternativ zur obigen Ausführung umfasst das Empfängersystem zumindest zwei Empfänger und eine Logikeinheit. Dabei ist vorteilhaft jeweils einem Empfangskanal der hinterlegten Empfangskanäle jeweils ein Empfänger zugeordnet, der diesen Empfangskanal abhört.

Die letztgenannte Ausführungsform eines Empfängersystems hat den Vorteil, dass sie verhältnismäßig kostengünstig ausgeführt werden kann.

Bei beiden Alternativen eines entsprechenden Empfängersystems besteht ein Vorteil darin, dass gleichzeitig mehrere Empfangskanäle abgehört werden, sodass die Gefahr eines Informationsverlustes nicht empfangener Nachrichten reduziert wird.

In diversen Ausführungsformen ist das Empfängersystem als Sende-Empfangs-System ausgeführt, das neben einem Empfangen einer Funknachricht auch ein Senden von Telegrammen auf einem (Rück-)Kanal zu einem sendenden Funksystem durchführen kann, wobei das Empfängersystem eingerichtet ist, vermittels des (Rück-)Kanals Informationen über eine Kanalbelegung und/oder Kanal(aus-)wahl im Empfängersystem an das Funksystem zu übermitteln. Dies hat den Vorteil, dass das sendende Funksystem eine Sendekanalwahl anhand solcher Informationen und Kriterien abstimmen kann, wie sie gegenwärtig und/oder statistisch in einem Empfängersystem vorliegen.

In diversen Ausführungsformen ist das Empfängersystem eingerichtet, ein obiges Verfahren zur Ermittlung eines geeigneten Empfangskanals durchzuführen.

In einem weiteren Aspekt wird die obige Aufgabe durch eine Anordnung mit einem Empfängersystem der obigen Art und einem Funksystem gelöst, wobei das Funksystem aufweist:
- einen Energiewandler zur Wandlung nichtelektrischer Primärenergie aus der Umgebung in elektrische Energie, wobei der Energiewandler durch eine mechanische Betätigung eines Betätigungselementes des Funksystems anregbar ist,
- eine Schalteinheit, welche eingerichtet ist, eine mechanische Betätigung des Betätigungselementes in ein logisches Signal umzuwandeln und daraus eine vorbestimmte Funknachricht zu generieren, sowie
- eine Sendeeinheit zum Senden der vorbestimmten Funknachricht auf einem oder mehreren im Funksystem hinterlegten Sendekanälen.

Das Funksystem ist beispielsweise eingerichtet, ein Verfahren zum Senden von Nachrichten eines energieautarken Funksystems der oben erläuterten Art durchzuführen.

Im Folgenden ist eine Liste ergänzender Aspekte dargestellt, die in einem entsprechenden Sende- bzw. Empfangsverfahren der erläuterten Art Berücksichtigung finden können.
1) Verfahren zum (energieautarken) Senden, umfassend die Schritte:
   a. Festlegen einer Liste bevorzugter Sendekanäle aus einer Liste möglicher Sendekanäle;
   b. Prüfen ob ein erster bevorzugter Sendekanal, aus der Liste bevorzugter Sendekanäle, belegt ist;
   c. Senden falls der erste bevorzugte Sendekanal nicht belegt ist; und
   d. Wiederholen der Schritte ab a) für zumindest einen weiteren bevorzugten Sendekanal, aus der Liste bevorzugter Sendekanäle.
2) Verfahren zum (energieautarken) Senden nach Aspekt 1, wobei die Liste bevorzugter Sendekanäle mehr als zwei Einträge aufweist.
3) Verfahren zum (energieautarken) Senden nach einem der vorhergehenden Aspekte, wobei die, zur Durchführung des Verfahrens, benötigte elektrische Energie durch Wandlung nichtelektrischer Primärenergie aus der Umgebung in elektrische Energie bereitgestellt wird.
4) Verfahren zum (energieautarken) Senden nach einem der vorhergehenden Aspekte, wobei das Verfahren nach einer vorbestimmten Anzahl an Sendevorgängen beendet wird.
5) Verfahren zum (energieautarken) Senden nach Aspekt 4, wobei das Verfahren nach zwei Sendevorgängen beendet wird.
6) Verfahren zum (energieautarken) Senden nach Aspekt 4, wobei das Verfahren nach drei Sendevorgängen beendet wird.
7) Verfahren zum (energieautarken) Senden nach einem der vorhergehenden Aspekte, wobei die Sendekanäle, aus der Liste möglicher Sendekanäle, eine Sendefrequenz zwischen 2,4 GHz und 2,4835 GHz aufweisen.
8) Verfahren zum (energieautarken) Senden nach Aspekt 7, wobei das Senden dem IEEE 802.15.4 Standard genügt.
9) Verfahren zum (energieautarken) Senden nach einem der Aspekte 7 oder 8, wobei die Liste bevorzugter Sendekanäle insbesondere Sendekanäle mit Sendefrequenzen umfasst, die nicht vom IEEE 802.11 Standard verwendet werden oder eine geringe statistische Belegung aufweisen.
10) Verfahren zum (energieautarken) Senden nach einem der Aspekte 7 bis 9, wobei der erste bevorzugte Sendekanal ein Sendekanal mit einer Sendefrequenz ist, die nicht vom IEEE 802.11 Standard verwendet wird oder eine geringe statistische Belegung aufweist.
11) Verfahren zur Ermittlung eines geeigneten Empfangskanals, umfassend die Schritte:
   a. Ermitteln der Belegungsrate eines ersten Empfangskanals, aus einer Liste möglicher Empfangskanäle, über eine Zeit T;
   b. Vergleichen der Belegungsrate mit einem vorgegebenem Kriterium;
   c. Speichern der Belegungsrate des ersten Empfangskanals bei nicht-erfüllen des vorgegebenen Kriteriums und Ermitteln der Belegungsrate für zumindest einen weiteren Empfangskanal aus der Liste möglicher Empfangskanäle;
   d. Wahl eines Empfangskanals, aus der Liste möglicher Empfangskanäle, auf Basis der gespeicherten Belegungsraten; wobei das Verfahren bei Ermittlung eines Empfangskanals mit einer Belegungsrate, welche das vorgegebene Kriterium erfüllt, unmittelbar beendet wird und der aktuelle Empfangskanal als neuer Empfangskanal gewählt wird.
12) Verfahren zur Ermittlung eines geeigneten Empfangskanals nach Aspekt 11, wobei die Belegungsrate maximal bis zum Erreichen einer vorgegebenen Anzahl an gespeicherten Belegungsraten ermittelt wird.
13) Empfangsanordnung, mit einem Empfänger und zumindest einer Logikeinheit,
   wobei die Empfängeranordnung geeignet ist das Verfahren gemäß Aspekt 11 oder 12 durchzuführen.
14) Empfangsanordnung nach Aspekt 13,
   wobei der Empfänger ausgebildet ist, gleichzeitig auf allen Kanälen aus der Liste möglicher Empfangskanäle zu empfangen.
15) Empfangsanordnung mit zumindest
   - zwei Empfängern; und
   - einer Logikeinheit,
   wobei die Anordnung geeignet ist das Verfahren gemäß Aspekt 11 oder 12 durchzuführen und wobei die Anordnung ausgebildet ist, parallel auf mehreren Kanälen aus der Liste möglicher Empfangskanäle zu empfangen.
16) Empfangsanordnung nach einem der Aspekte 13 bis 15, wobei die Anordnung ausgebildet ist, das Verfahren nach Aspekt 11 oder 12 periodisch durchzuführen.

Nachfolgend wird beispielhaft die Verwendung eines Funksystems in einem Initialisierungsverfahren beschrieben. Vorteilhaft kann das Aussenden einer entsprechenden Initialisierungsnachricht der nachfolgenden Art mit einer vorhergehenden Kanalwahl gemäß der oben erläuterten Art kombiniert werden, um eine sichere und störungsfreie Initialisierung zu gewährleisten.

Eine erste Konfiguration des Initialisierungsverfahrens verwendet die Betätigungsdauer eines Schalters, um das Aussenden einer Initialisierungsnachricht auf einer best. Frequenz zu veranlassen. Ein Schalter weißt zumindest ein Betätigungselement auf, idealerweise hat er mehrere Betätigungselemente, z.B. zwei Schaltwippen und somit vier mögliche Stellungen. Beim Betätigen der Schaltwippe in eine ihrer beiden möglichen Positionen wird in der Sendeanordnung, die mit der Schaltwippe verbunden ist, der Energiewandler betätigt, um Energie bereitzustellen. Ferner wird in der Logikeinheit der Sendeanordnung ein Zeitgeber (Timer) gestartet.

Beim Loslassen der Schaltwippe wird der Wert des Timers durch die Logik ausgelesen und mit einem vorgegebenen Kriterium verglichen. Falls das Kriterium erfüllt ist, wird eine Initialisierungsnachricht durch die Sendeeinheit der Sendeanordnung ausgesendet. Für die praktische Anwendung des Schalters ist es beispielsweise denkbar den Schalter durch langes Drücken (z.B. 10sec) in den Initialisierungsmodus zu versetzen. Sind mehrere Betätigungselemente vorhanden (z.B. mehrere Schaltwippen), so kann eine jede Schalterstellung im Initialisierungsmodus mit einer bestimmten Sendefrequenz oder unter Umständen mit einem bestimmten Sendekanal der obigen Art assoziiert sein.

### Dies ermöglicht somit ein Aussenden von

Initialisierungsnachrichten auf verschiedenen Frequenzen bzw. auf verschiedenen Sendekanälen, um letztendlich den Schalter auf einer Frequenz einzulernen, die vom Funknetzwerk momentan verwendet wird. Die Schalterposition im Initialisierungsmodus bestimmt die weitere Sendefrequenz des Schalters bis zur nächsten Initialisierung des Schalters. Das Funknetzwerk kann beispielsweise das sogenannte "Zigbee Green Power" Funkprotokoll verwenden. Die verschiedenen Sendefrequenzen bzw. Sendekanäle können über oben erläuterte Maßnahmen einer Sendekanalwahl bestimmt werden.

Wird der Schalter normal (über einen vergleichsweise kurzen Zeitraum) gedrückt, so wird ebenfalls der Timer gestartet, erfüllt jedoch nicht das vorgegebene Kriterium. Dadurch verbleibt die Logik im normalen Betriebsmodus und sendet die mit dem Betätigungselement assoziierte Nachricht gemäß einer Bedienoperation aus (z.B. Licht an, Licht aus oder Dimmen, usw.). Idealerweise ist das Betätigungselement mit der Logikeinheit der Sendeanordnung derart wirkverbunden, dass das Betätigen bzw. das Loslassen des Betätigungselements durch die Logikeinheit detektierbar ist.

### Gemäß einer zweiten Konfiguration des

Initialisierungsverfahrens, die sich besonders für Schalter mit nur einem Betätigungselement eignet, wird der Initialisierungsmodus durch bestimmte zeitliche Abfolgen des Schalterdrückens gestartet. Wird der Schalter in bestimmten zeitlichen Abständen gedrückt wird der Initialisierungsmodus gestartet und eine Initialisierungsnachricht auf einer best. Frequenz oder auf einem (zuvor nach obigen Maßnahmen ausgewählten) Sendekanal ausgesendet. Durch verschiedene zeitliche Abfolgen des Drückens können Initialisierungsnachrichten auf verschiedenen Frequenzen ausgesendet werden. Wie in der ersten Ausführungsform ist die Sendefrequenz des Schalters durch die Sendefrequenz der letzten Initialisierung bestimmt. Durch die Verwendung zeitlicher Abfolgen kann eine Vielzahl von Funkfrequenzen oder Sendekanälen durch den Schalter, unabhängig von der Schalterform, abgedeckt werden.

In einer dritten Konfiguration, die sich für Schalter mit mehr als einem Betätigungselement eignet, wird statt einer zeitlichen Abfolge von Betätigungen die Reihenfolge des Betätigens der verschiedenen Betätigungselemente zum Starten des Initialisierungsmodus verwendet. Hat der Schalter wiederrum zwei Schaltwippen und somit vier Stellungen, so kann beispielsweise die Abfolge der Stellungen 1-2-3-4-3-2-1 verwendet werden, um die Sendeanordnung in den Initialisierungsmodus zu versetzten und eine Initialisierungsnachricht auszusenden. Durch verschiedene Schalterkombinationen können wiederrum verschiedene Frequenzen bzw. Sendekanäle abgedeckt werden.

Das Verfahren ist geeignet für die Initialisierung bzw. das Pairing von Sensoranordnungen in oder mit Funknetzwerken in allen Frequenzbereichen, insbesondere jedoch im freien 2,4 GHz Frequenzband, das weltweit nutzbar ist. Das Verfahren ist ebenso geeignet in Funknetzwerken, die den "Zigbee Green Power" Standard verwenden. Daher ist es vorteilhalft wenn die ausgesendeten Nachrichten zumindest dem IEEE 802.15.4 Standard genügen.

Das Verfahren richtet sich insbesondere auf energieautarke Funkschalter, die eine Sendeanordnung aufweisen und durch einen integrierten Energiewandler mit elektrischer Energie versorgt werden. Vorteilhaft führen solche Funksysteme kombiniert mit einem entsprechenden Initialisierungsverfahren einen Wechsel mehrerer Sendekanäle durch, wie weiter oben erläutert.

Eine verwendete Sendeanordnung kann beispielsweise vier Betätigungselemente und einen Induktionswandler aufweisen, der über eine Mechanik mit einer externen Kraft (z.B. vermittels einer Schaltwippe) beaufschlagt werden kann. Durch das gemeinsame Betätigen von Betätigungselement und Energiewandler ist die Energieversorgung der Sendeanordnung gesichert.

Sämtliche Maßnahmen, Verfahrensschritte oder Aspekte der hier insgesamt erläuterten Verfahren sind auch auf entsprechende Empfängersysteme bzw. Funksysteme als Sender anwendbar und in Form gegenständlicher Merkmale übertragbar und umgekehrt.

Nachfolgend wird die Erfindung anhand mehrerer Zeichnungen näher erläutert.

### Es zeigen:

- Figur 1: eine Explosionsdarstellung einer Ausführungsform eines Funksystems,
- Figur 2: einen schematisierten Verfahrensablauf eines Verfahrens zum Senden von Nachrichten eines senderseitigen energieautarken Funksystems und
- Figur 3: einen schematisierten Verfahrensablauf eines Verfahrens zur Ermittlung eines geeigneten Empfangskanals eines Empfängersystems.

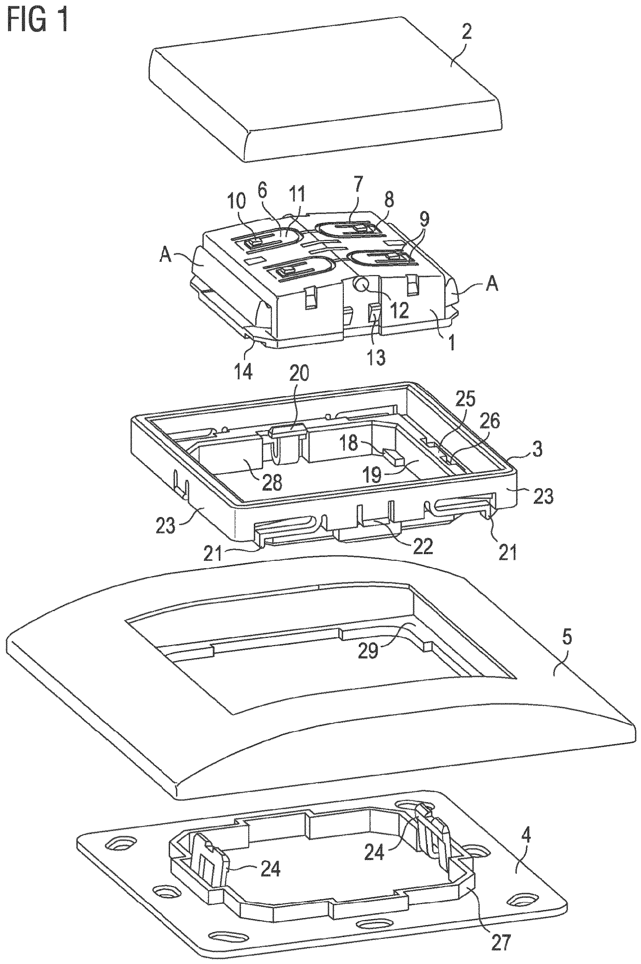

Die Figur 1 zeigt in einer Explosionsdarstellung eine Ausführungsform eines energieautarken Funksystems der erläuterten Art, welches hier exemplarisch als Funkschalter zur Aufputzmontage ausgeführt ist. Insbesondere zeigt Figur 1 ein Modulgehäuse 1, eine Schaltwippe 2, einen Zwischenrahmen 3 und eine Bodenplatte 4, wie sie gemeinsam mit einem Zierrahmen 5 zusammengesetzt werden können. Im Modulgehäuse 1 ist ein elektronisches Modul eingerichtet. Das Modulgehäuse 1 weist vier Betätigungselemente 6 auf, über die Schaltelemente bzw. Kontakte (nicht explizit dargestellt) einer Elektronik, z.B. auf einer Platine, des im Modulgehäuse sitzenden Moduls betätigt werden können, um einen Betriebsmodus bzw. eine Bedienoperation des Funk-Moduls kodieren zu können. Beispielsweise könnte über das Funksystem eine Deckenbeleuchtung in einem Raum gesteuert werden, wobei über die Schalterstellungen der Schaltelemente (aktiviert über die Betätigungselemente 6) Funktionen wie EIN, AUS oder DIMMEN realisierbar sind.

Das Modul im Modulgehäuse 1 weist neben der Elektronik zur Erkennung einer Betätigung eines Schaltelementes vermittels eines Betätigungselements 6 einen Prozessor sowie eine Hochfrequenz- bzw. Radiofrequenz-Sendeeinheit auf. Der Prozessor verarbeitet die über die Elektronik erfasste Betätigung der einzelnen Schaltelemente in logische Signale und kodiert diese in eine Funknachricht. Ferner können weitere Informationen, wie z.B. eine Identifikationsnummer des Funksystems, Zeitstempel, Sendekanal-Informationen, usw. in die Funknachricht eingebettet werden. Die Funknachricht wird dann verschlüsselt und entsprechend einer vorgegebenen Protokoll-Struktur für das Versenden aufbereitet. Anschließend können die erstellten Telegramm-Daten der Funknachricht über die Sendeeinheit und eine Antenne vom Modul per Funk an ein oder mehrere Empfängersysteme versendet werden.

Das in Figur 1 dargestellte Funksystem verfügt ferner über einen Energiewandler, der beispielsweise als elektrodynamischer Energiewandler ausgeführt ist. Hierzu weist das Modulgehäuse 1 auf zwei gegenüberliegenden Seiten jeweils ein Auslöseelement A auf. Die Auslöseelemente A sind als Hebel ausgeführt und können über die Schaltwippe 2 betätigt werden. Beispielsweise werden die Auslöseelemente A des Energiewandlers vermittels der über die Schaltwippe 2 eingebrachten mechanischen Energie bei einer Betätigungskraft zwischen 5 und 10 N über einen Betätigungsweg zwischen 1 mm und 3 mm bei Raumtemperatur betätigt. Eine Ausführung kann beispielsweise einen Betätigungsweg von 1,8 mm bei einer Betätigungskraft von 8 N aufweisen.

Über die Auslöseelemente A kann der Energiewandler angeregt werden und dient als Stromversorgung des Funksystems. Dabei wird bei jeder Betätigung der Schaltwippe 2 und daraus resultierender Betätigung eines der Auslöseelemente A ausreichend mechanische Energie in elektrische Energie gewandelt, so dass das Funksystem betrieben werden kann. Beispielsweise können die Auslöseelemente A jeweils einen Permanentmagneten oder eine elektrische Spule tragen, die aufgrund der mechanischen Bewegung relativ zum jeweils anderen Element (Permanentmagnet oder Spule) bewegt werden, sodass durch Induktion ein elektrischer Strompuls erzeugt wird, der über einen Wandler in stabilen Gleichstrom gewandelt wird und die Betriebsenergie für die anderen elektronischen Komponenten des Moduls bildet.

Der Prozessor des Moduls kann auch die Stellung bzw. Betätigung der einzelnen Auslöseelemente A erkennen und kodieren, sodass diese Information ebenfalls in einer Funknachricht an ein Empfängersystem übermittelt werden kann. Ferner können die unterschiedlichen Bewegungsrichtungen der jeweiligen Auslöseelemente A detektiert und über den Prozessor verarbeitet werden. Auf diese Weise ist ein Modul für eine Aufputzmontage gebildet, welches als energieautarkes Funksystem zum Senden von Funknachrichten an Empfängersysteme, z.B. als Lichtschalter für Deckenbeleuchtungen, eingerichtet ist.

Die mechanische Ausführung der sonstigen Elemente wird nachfolgend näher erläutert. Die Betätigungselemente 6 des Modulgehäuses 1 sind aus einer Oberfläche des Modulgehäuses 1 gebildet. Dazu sind an jedem Betätigungselement 6 eine erste u-förmige Ausnehmung 7 und eine zweite u-förmige Ausnehmung 8 aus der Oberfläche des Modulgehäuses 1 genommen. Die u-förmige Ausnehmung 7 und die u-förmige Ausnehmung 8 sind jeweils zueinander umgekehrt gerichtet, so dass eine Art w-förmiges Betätigungselement 6 gebildet ist.

Die Betätigungselemente 6 können vermittels einer Betätigungskraft an der Schaltwippe 2 und entsprechenden Elementen an der Schaltwippe 2 (nicht dargestellt) nach innen, d.h. in das Modulgehäuse 1 hinein, verformt und gebogen werden, sodass sie an Stellen 10 mit Schaltelementen der entsprechenden Elektronik zusammenwirken und diese mit elektrischen Kontakten auf der Platine - wie oben erläutert - kontaktieren. Auf diese Weise ist durch Betätigen der Schaltwippe 2 an verschiedenen Stellen des Moduls eine Kodierung unterschiedlicher Betriebsmodi realisiert.

Durch die besondere Ausführungsform der Betätigungselemente 6 ist ein Überhub möglich. Dieser Überhub kann erforderlich sein, um die Lebensdauer der unter der Stelle der Kraftausübung 11 angebrachten Schaltelemente des elektronischen Moduls zu erhöhen. Insbesondere kann der Überhub auch vorteilhaft sein, da für das elektronische Modul - wie oben erläutert - eine Stromversorgung gebildet ist, die aus der durch die Schaltwippe 2 eingebrachten mechanischen Energie die zur Versorgung des elektronischen Moduls notwendige elektrische Energie bildet. Dazu ist ein ausreichend langer Weg für die Schaltbewegung vorzusehen, der sich ohne Überhub negativ auf die Lebensdauer der Schaltelemente des elektronischen Moduls auswirken würde. Aus diesem Grunde ist der erreichte Überhub besonders vorteilhaft.

Zur Aufnahme der Schaltwippe 2 ist eine zylindrische Wippenaufnahme 12 gebildet, in die die Schaltwippe 2 mit ihrerseits dazu vorgesehenen Rastelementen (nicht dargestellt) einrastet. Durch die zylindrische Form der Wippenaufnahme 12 und die diese teilweise umgebenden Rastelemente ist eine Achse gebildet, die eine Drehachse der Wippbewegung der Schaltwippe 2 darstellt. Die Schaltwippe 2 selbst weist zur Betätigung der Betätigungselemente 6 Hervorhebungen (nicht dargestellt) auf, die die notwendige Kraft und Bewegung auf die Schaltelemente des elektronischen Moduls vermittels der Betätigungselemente 6 ausüben.

Das Modulgehäuse 1 weist außerdem Anlagestellen 14 auf, die zur präzisen Zentrierung des Modulgehäuses 1 gegenüber dem Zwischenrahmen 3 wirken. Diese Anlagestellen des Modulgehäuses 1 sind vorzugsweise in den Ecken ausgebildet, so dass eine exakte Zentrierung des Modulgehäuses 1 in dem Zwischenrahmen 3 möglich ist.

Korrespondierend zu den Anlagestellen 14 sind am Zwischenrahmen 3 Auflagestellen 18 gebildet. Diese sind formschlüssig zueinander ausgebildet. Durch die formschlüssige Ausführung der Auflagestellen 18 mit Anlagestellen 14 lässt sich das Modulgehäuse 1 zentriert im Zwischenrahmen 3 anordnen. Eine Befestigung des Modulgehäuses 1 am Zwischenrahmen 3 erfolgt durch erste Rasthaken 20, die an der Innenseite 19 des Zwischenrahmens 3 federnd angeordnet sind. Vorteilhaft sind diese Rasthaken 20 gegenüberliegend voneinander angeordnet. Diese Rasthaken 20 korrespondieren mit den Rastnasen 13 des Modulgehäuses 1. Damit ist eine spiel- und wackelfreie formschlüssige Verbindung des Modulgehäuses 1 mit dem Zwischenrahmen 3 möglich.

Der Zwischenrahmen 3 ist seinerseits mit der Bodenplatte 4 verbunden. Diese Verbindung ist durch zweite Rasthaken 24 und zweite Rastelemente 25 mit Ausnehmungen 26 gebildet. Dabei ist ein Höhenausgleich mit Federelementen 21 gebildet. Ferner ist eine Zentrierung gegenüber dem Zierrahmen 5 durch Federelemente 22 gewährleistet. Dies ist erforderlich, da an den Zierrahmen 5 die innere Aussparung prinzipiell Maßtoleranzen aufweist. Durch die mit den Federelementen 23 erreichte Zentrierung werden gleichmäßige Spaltmasse zum Zierrahmen 5 hin erreicht. Die Federelemente 22 sind dabei an der Außenseite 23 des Zwischenrahmens 3 angeordnet.

Der Zwischenrahmen 3 sowie die Bodenplatte 4 verfügen über zwei korrespondierende Zentrierkränze, womit eine exakte Zentrierung durch den ersten Zentrierkranz 27 an der Bodenplatte mit dem zweiten Zentrierkranz 28 am Zwischenrahmen möglich ist. Zwischen den beiden Elementen, Zwischenrahmen 3 und Bodenplatte 4, ist der Zierrahmen 5 angeordnet. Über die Federelemente 21 und die Rastelemente 24 und Rastnasen 25 ist eine Verbindung zwischen Zwischenrahmen und Bodenplatte 4 gegeben, die zusätzlich den Zierrahmen 5 unter Ausnutzung des an ihm stets vorhandenen Befestigungskranz 29 aufnehmen. Eventuelle Differenzen in der Höhe des Befestigungskranzes 29 werden durch die Federelemente 21 ausgeglichen.

Auf diese Weise kann ein Modulgehäuse 1 mit einem darin integrierten Funk-Modul der erläuterten Art auf einfache Weise in standardisierte Rahmen zur Aufputzmontage integriert werden. So können herkömmliche Schalter, wie Lichtschalter, Jalousie-Schalter, Thermostat-Schalter, Fenster-Aktuator-Schalter, usw. über einen in die Schaltergehäuse integrierbaren Formfaktor des Modulgehäuses 1 elegant um die Funktionalitäten des elektronischen Funk-Moduls erweitert werden.

Natürlich ist auch denkbar, ein Modul mit einem entsprechenden Modulgehäuse 1 in anderen Bedien- oder Schalterapplikationen und Gehäuseausführungen einzusetzen. Insofern ist das Modul mit dem in Figur 1 dargestellten Formfaktor des Modulgehäuses 1 losgelöst von den sonstigen Montage- und Rahmenteilen aus Figur 1 zu betrachten.

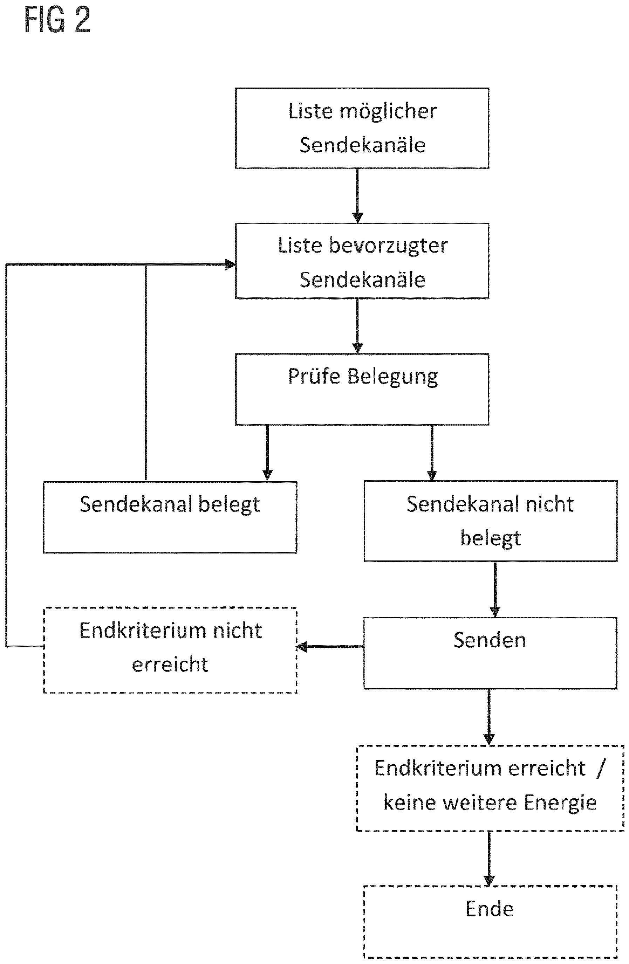

Figur 2 zeigt einen schematisierten Ablauf eines möglichen Verfahrens zum Senden von Nachrichten eines energieautarken Funksystems der hier erläuterten Art. Das Verfahren ist beispielsweise in einem elektronischen Modul implementiert, wie zu Figur 1 erläutert. Das Verfahren kann beispielsweise als Ablaufprogramm hinterlegt sein und vermittels des Prozessors im Modul abgearbeitet werden.

Initial wird eine Liste mit möglichen voreingestellten Sendekanälen im Funksystem hinterlegt. Die Liste enthält beispielsweise eine Vielzahl von Sendekanälen mit einer vorgegebenen Bandbreite eines gängigen Übertragungsstandards, z.B. gemäß dem IEEE 802.15.4 Standard. Hier kann beispielsweise ein Frequenzbereich zwischen 2,4 GHz und 2,4835 GHz berücksichtigt sein. Es ist jedoch alternativ oder ergänzend denkbar, auch einen Frequenzbereich zwischen 5,725 GHz und 5,875 GHz zu berücksichtigen und abzudecken.

Aus dieser Liste der möglichen Sendekanäle wird eine Liste mit einem oder mehreren bevorzugten Sendekanälen erstellt. Die bevorzugten Sendekanäle können beispielsweise anhand statistischer Erwägungen ausgewählt werden oder anhand sonstiger Kriterien, wie z.B. anhand kanalabhängiger und/oder temporärer (d.h. z.B. momentaner oder zeitlich unterscheidbarer) Kriterien oder in Abhängigkeit von vorbestimmten Zeitpunkten ausgewählt werden. Auch ein Störpegel oder generell ein Signalpegel kann, ggf. kombiniert mit oder alternativ zu obigen Kriterien herangezogen werden. Es können auch für jeden möglichen Sendekanal anhand eines ggf. wiederholten Prüfens einer Kanalbelegung, d.h. Abhören des Kanals, ob gerade ein anderes Funksignal übertragen wird, eine statistische Belegwahrscheinlichkeit des Sendekanals oder weitere Maßzahlen anhand obiger Kriterien (d.h. in Abhängigkeit von der Bandbreite des Kanals und/oder von der Zeit und/oder von einem Signalpegel) ermittelt werden. Daraus kann dann eine Entscheidung darüber getroffen werden, ob ein Sendekanal bevorzugt ist oder nicht.

Sendekanäle mit einer niedrigen Belegwahrscheinlichkeit oder mit guten bzw. günstigen Eigenschaften im Sinne obiger Kriterien werden als bevorzugte Kanäle ausgewählt. Deren Kanalverfügbarkeit trotz koexistierender anderer Funksysteme ist erhöht im Vergleich zu anderen Sendekanälen mit einer ggf. höheren Belegwahrscheinlichkeit oder schlechteren bzw. ungünstigeren Eigenschaften im Sinne obiger Kriterien. Ein stabiler Datenaustausch des vorliegenden Funksystems mit Empfängersystemen auf den bevorzugten Sendekanälen ist somit leichter zu erreichen als auf anderen Sendekanälen. Neben der Belegwahrscheinlichkeit und Kriterien der oben erläuterten Art können auch andere Parameter, z.B. eine Störempfindlichkeit, Signal-Rausch-Abstände, Leistungsdichtespektren oder ähnliches, herangezogen werden.

Nachfolgend wird ein verfahrensgemäßes vorteilhaftes Szenario dargestellt. Aus der Liste bevorzugter Sendekanäle wird ein erster Sendekanal auf Belegung geprüft. Hierzu schaltet das Funksystem die Antenne auf Empfang und hört den Sendekanal ab, ob gerade Radiofrequenz-Signale über den Sendekanal laufen. Ist dieser nicht belegt, so wird auf diesem Sendekanal gesendet.

Im Weiteren oder falls der erste bevorzugte Sendekanal belegt ist, werden iterativ weitere Sendekanäle aus der Liste bevorzugter Sendekanäle geprüft, bis ein Endkriterium erreicht ist. Dieses Endkriterium kann dadurch definiert sein, dass entweder eine obere Grenze an Aussendungen erfolgt ist, die Liste komplett durchgeprüft wurde oder die zur Verfügung stehende elektrische Betriebsenergie verbraucht ist. Bei Erreichen des Endkriteriums wird das Verfahren abgebrochen bzw. beendet.

Die Energie für das Verfahren wird durch einen Energiewandler aus nichtelektrischer Umgebungsenergie bereitgestellt. Dies kann z.B. ein elektrodynamisch angeregter Energiewandler, insbesondere ein Induktionswandler wie oben zu Figur 1 erläutert, sein. Aufgrund des geringen Energiebedarfs der Belegungsprüfung reicht die elektrische Energie des Energiewandlers aufgrund einer einzelnen Betätigung des Funksystems mit geringen Betätigungswegen und/oder Betätigungskräften, z.B. vermittels einer Schaltwippe 2 (vgl. Figur 1), zur wiederholten Durchführung der obigen Maßnahmen aus. So können üblicherweise zwischen zwei und vier Sendekanäle geprüft werden und auch dementsprechend zwei bis vier Funknachrichten ausgesendet werden. Es werden somit üblicherweise auf verschiedenen Frequenzen verschiedener Sendekanäle Funknachrichten ausgesendet. Idealerweise ist darunter zumindest ein Sendekanal, der nicht belegt ist, sodass die Funknachricht erfolgreich versendet werden kann. Die Wahrscheinlichkeit erhöht sich somit, dass zumindest eine dieser Funknachrichten vom zugeordneten Empfängersystem empfangen wird.

Bevorzugt wird als Sendefrequenz ein Sendekanal aus einem freien 2,4 GHz-Band gewählt. Bei einem Betrieb im 2,4 GHz-Band sollten sich in der Liste bevorzugter Sendekanäle vorteilhaft insbesondere solche Sendekanäle befinden, die nicht vom IEEE 802.11 Standard (WLAN bzw. WiFi) verwendet werden. Auch solche Sendekanäle, die nur eine geringe statistische Belegung aufweisen, können berücksichtigt werden. Die Methode zur Ermittlung der statistischen Belegung ist oben ausgeführt. Besonders vorteilhaft ist es, wenn der erste bevorzugte Sendekanal, welcher geprüft wird, ein Kanal ist, der nicht vom IEEE 802.11 Standard verwendet wird oder nur eine geringe statistische Belegung aufweist.

Die oben erläuterten Maßnahmen haben den Vorteil, dass senderseitig in einem Funksystem, dessen Formfaktor z.B. gemäß Figur 1 (vgl. Modulgehäuse 1) ausgeführt sein kann und das über geringe mechanische Betätigungswege und/oder -kräfte angeregt wird, dennoch ausreichend Betriebsenergie erzeugt wird. Ferner kann eine vorteilhafte Kanalwahl von Sendekanälen durchgeführt werden, sodass eine kollisionsfreie Datenübertragung in Funknetzen trotz einer eventuellen Vielzahl koexistierender Funksysteme ermöglicht ist.

Bei einer Anwendung eines Verfahrens zum Senden von Nachrichten eines energieautarken Funksystems der hier erläuterten Art ist es sinnvoll und wichtig, eine Sendekanalwahl anhand einer Augenblicksentscheidung, d.h. anhand einer Entscheidung über die momentan bzw. gegenwärtig vorliegenden Gegebenheiten eines Sendekanals (z.B. Belegung) anhand oben erläuterter Kriterien, vorteilhaft in Abhängigkeit von der Bandbreite des Kanals und/oder von der Zeit und/oder von einem Signalpegel, durchzuführen. Ein energieautarkes Funksystem kann durch Betätigung eines Betätigungselementes aktiviert werden und anhand gegenwärtiger Gegebenheiten der geprüften Sendekanäle entscheiden, welcher Sendekanal in diesem Zeitpunkt als am günstigsten erscheint. Dieser Sendekanal kann dann zum Senden einer Funknachricht gewählt werden.

Im Zusammenhang mit dem Verfahrensablauf aus Figur 2 kann auch ein Rückkanal eines oder mehrerer Empfängersysteme zum jeweils sendenden Funksystem vorgesehen und eingerichtet sein. Durch den Rückkanal kann ein Empfängersystem dem sendenden Funksystem z.B. Informationen über eine Kanalbelegung oder Kanal(aus-)wahl im Empfängersystem zurück senden. Dies hat den Vorteil, dass das sendende Funksystem eine Sendekanalwahl auch anhand solcher Informationen und Kriterien abstimmen kann, wie sie gegenwärtig und/oder statistisch in einem Empfängersystem vorliegen. Ein Rücksenden über den Rückkanal kann beispielsweise nach einer vorbestimmten Zeitspanne erfolgen oder in Kombination mit einem vom Funksystem erwarteten, ggf. protokollabhängigen, ACK-Signal.

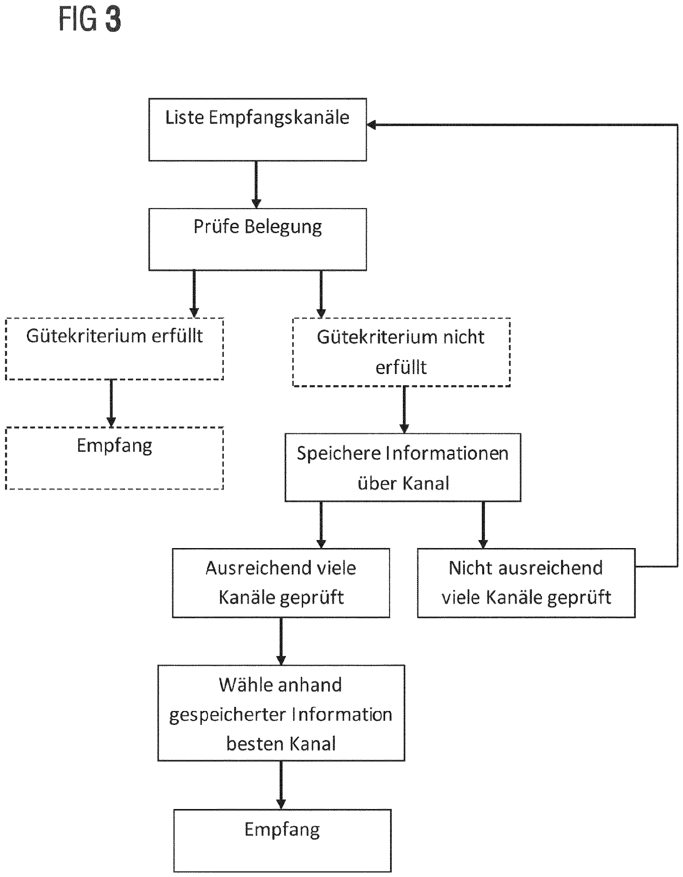

Figur 3 zeigt einen schematisierten Ablauf eines möglichen Verfahrens zur Ermittlung eines geeigneten Empfangskanals eines Empfängersystems der hier erläuterten Art. Nachfolgend wird ein verfahrensgemäßes vorteilhaftes Szenario in einem Empfangssystem dargestellt.

Aus einer Liste möglicher Empfangskanäle wird ein erster Empfangskanal über eine Zeit T auf dessen Belegung geprüft. Es können neben einer aktuellen Belegung alternativ oder ergänzend auch eine Belegungsrate oder Belegwahrscheinlichkeit, aber auch Kriterien in Abhängigkeit von der jeweiligen Bandbreite des Empfangskanals und/oder von der Zeit (z.B. momentane oder zeitlich unterscheidbare Kriterien) und/oder von einem Signalpegel auf dem Empfangskanal herangezogen werden. Generell wird somit eine statistische Kanalverfügbarkeit ermittelt.

Entspricht diese Kanalverfügbarkeit einem vorgegebenen Kriterium (z.B. Gütekriterium einer Empfangsgüte, niedrige Störempfindlichkeit, niedrige spektrale Rauschleistungsdichte, usw.), ist also ein Gütekriterium erfüllt, so wird das Verfahren unmittelbar beendet und im Weiteren auf diesem Empfangskanal empfangen (vgl. linker Pfad in Figur 3 ausgehend vom Block "Prüfe Belegung").

Sollte der geprüfte Empfangskanal nicht das vorgegebene Gütekriterium erfüllen (vgl. rechter Pfad in Figur 3 ausgehend vom Block "Prüfe Belegung"), so werden die ermittelten (statistischen) Informationen (z.B. Belegung bzw. Belegwahrscheinlichkeit oder sonstige Maßzahlen) des Empfangskanals gespeichert und iterativ die weiteren Empfangskanäle aus der Liste möglicher Empfangskanäle geprüft. Dies kann für alle Empfangskanäle oder bis zu einer festgelegten ausreichenden Obergrenze erfolgen. Sollte im Weiteren einer dieser Empfangskanäle das vorgegebene Kriterium erfüllen, wird das Verfahren beendet und der Kanal als Empfangskanal beibehalten. Sollte keiner der Kanäle das vorgegebene Kriterium erfüllen, wird aufgrund der gespeicherten Informationen der geeignetste bzw. beste Kanal im Sinne der obigen Kriterien und Maßgaben ermittelt und im Weiteren als Empfangskanal gewählt.

Es ist denkbar, das Verfahren auch ohne eine separate Entscheidung über ein Gütekriterium durchzuführen. In diesem Falle würden die gestichelt dargestellten Blöcke in Figur 3 entfallen und direkt vom Block "Prüfe Belegung" zum Block "Speichere Informationen über Kanal" übergegangen.

Eine mögliche Anordnung zur Durchführung des Verfahrens weist dabei eine Logikeinheit auf und einen Empfänger, der geeignet ist gleichzeitig auf allen Empfangskanälen der Liste möglicher Empfangskanäle zu empfangen. Alternativ können auch mehrere Empfänger verwendet werden, um parallel auf mehreren oder allen Kanälen aus der Liste möglicher Kanäle zu empfangen/horchen.

Die obigen Maßnahmen auf Seiten eines Empfängersystems haben den Vorteil, dass Empfangskanäle mit vorteilhaften statistischen Eigenschaften für eine Signalübertragung herangezogen werden können. Ein Empfängersystem kann sich auf die Kanalwahl eines sendenden Funksystems einstellen, wobei auf die momentanen Gegebenheiten, wie z.B. Auslastung von Kanälen durch koexistierende Funksysteme und -standards, Rücksicht genommen wird. Gleichzeitig erlauben die erläuterten Verfahren im Zusammenspiel mit strukturellmechanischen Formfaktoren entsprechender Funksysteme eine energieeffiziente Durchführung. Insbesondere bei hier dargestellten energieautarken Funksystemen reicht die aus einer einzelnen mechanischen Betätigung gewonnene elektrische Energie zur Durchführung einer Kanalanpassung aus. Gerade im vielfach verwendeten freien 2,4 GHz Band freier Funkstandards kann somit eine störungsarme Datenübertragung realisiert werden.

Das Verfahren in Figur 3 kann ggf. periodisch zu festen oder variablen Zeitpunkten wiederholt durchgeführt werden, z.B. stündlich. Es ist auch denkbar, einzelne Schritte des Verfahrens zu unterschiedlichen Zeiten bzw. nach unterschiedlich langen Zeitabschnitten durchzuführen. So könnte z.B. eine Prüfung einer Belegung eines Kanals stündlich durchgeführt werden, während eine tatsächliche Kanalwahl z.B. nur wöchentlich durchgeführt wird.

Bei einer Anwendung eines Verfahrens zur Ermittlung eines geeigneten Empfangskanals eines Empfängersystems der hier erläuterten Art ist es sinnvoll und wichtig, eine Empfangskanalwahl anhand einer statistischen Erhebung, d.h. anhand längerfristiger Kriterien und Maßgaben zu treffen. Im Gegensatz zu einer senderseitigen Augenblicksentscheidung in energieautarken Funksystemen kann in Empfängersystemen (welche vorteilhaft kabelgebunden sind und ständig aktiviert sind) anhand von Prüfungen und Messungen entsprechender Empfangskanäle anhand obiger Kriterien eine Statistik über die Eigenschaften der zur Verfügung stehenden Empfangskanäle ermittelt werden. Diese Statistik erlaubt eine Entscheidung über eine Empfangskanalwahl im Sinne einer historischen Erfassung vorbestimmter Eigenschaften der Empfangskanäle.

Es ist in nicht dargestellten Ablaufstrukturen obiger Verfahren auch denkbar, ein senderseitiges Initialisierungsverfahren der oben erläuterten Art, umfassend eine Übertragung von Initialisierungsnachrichten auf unterschiedlichen Frequenzen bzw. unterschiedlichen Sendekanälen, mit einem Verfahren einer Sendekanalwahl anhand einer Prüfung einer Belegung der einzelnen Sendekanäle zu kombinieren.

Ferner ist denkbar, die dargestellten und erläuterten Verfahren zum Senden von Nachrichten eines energieautarken Funksystems (d.h. Verfahren auf Senderseite) und die dargestellten und erläuterten Verfahren zur Ermittlung eines geeigneten Empfangskanals eines Empfängersystems (d.h. Verfahren auf Empfängerseite) in einem gesamten Verfahren zu kombinieren.

Ferner ist denkbar, die dargestellten Ausführungen eines Funksystems und eines Empfängersystems in einer gesamten Anordnung eines oder mehrerer Funksysteme und eines oder mehrerer Empfängersysteme zu kombinieren.

Sämtliche dargestellten Ausführungsformen und Ablaufstrukturen dienen der Erläuterung und sind lediglich beispielhaft gewählt.

### Bezugszeichenliste

- 1: Modulgehäuse
- 2: Schaltwippe
- 3: Zwischenrahmen
- 4: Bodenplatte
- 5: Zierrahmen
- 6: Betätigungselement
- 7: Äußere u-förmige Ausnehmung
- 8: Innere u-förmige Ausnehmung
- 10: Stelle der Krafteinwirkung
- 11: Stelle der Kraftausübung
- 12: Wippenaufnahme
- 13: Rastnase
- 14: Anlagestellen
- 18: Auflagestellen
- 19: Innenseite des Zwischenrahmens
- 20: erster Rasthaken
- 21: Erste Federelemente
- 22: Zweite Federelemente
- 23: Außenseite des Zwischenrahmens
- 24: Zweiter Rasthaken
- 25: Zweites Rastelement
- 26: Ausnehmungen
- 27: Erster Zentrierkranz
- 28: Zweiter Zentrierkranz
- 29: Befestigungskranz
- A: Auslöseelement des Energiewandlers

## Patentansprüche

1. Anordnung mit einem Empfängersystem und
einem Funksystem;
wobei das Funksystem aufweist:
- einen Energiewandler zur Wandlung nichtelektrischer Primärenergie aus der Umgebung in elektrische Energie, wobei der Energiewandler durch eine mechanische Betätigung eines Betätigungselementes des Funksystems anregbar ist,
- eine Schalteinheit, welche eingerichtet ist, eine mechanische Betätigung des Betätigungselementes in ein logisches Signal umzuwandeln und daraus eine vorbestimmte Funknachricht zu generieren, sowie
- eine Sendeeinheit zum Senden der vorbestimmten Funknachricht auf einem oder mehreren im Funksystem hinterlegten Sendekanälen;
wobei das Empfängersystem einen Empfänger aufweist und eingerichtet ist, ein Verfahren mit den folgenden Schritten durchzuführen:
a.) Hinterlegen von wenigstens zwei Empfangskanälen in einem vorbestimmten Frequenzbereich im Empfängersystem,
b.) Voreinstellen des Empfängers auf einen bevorzugten hinterlegten Empfangskanal und
wobei das Empfängersystem als Sende-Empfangs-System ausgeführt ist, das neben einem Empfangen einer Funknachricht auch ein Senden von Telegrammen auf einem Rück-)Kanal zu dem sendenden
Funksystem durchführen kann,
wobei das Empfängersystem eingerichtet ist, vermittels des (Rück-)Kanals Informationen über eine Kanalbelegung und/oder Kanal(aus-)wahl im Empfängersystem an das Funksystem zu übermitteln.

2. Anordnung nach Anspruch 1, wobei das Empfängersystem ferner eingerichtet ist für jeden hinterlegten Empfangskanal die Belegwahrscheinlichkeit mit einem vorgegebenen Gütekriterium zu vergleichen und das Verfahren bei Ermittlung eines Empfangskanals mit einer Belegwahrscheinlichkeit, welche das vorgegebene Gütekriterium erfüllt, unmittelbar beendet wird und dieser Empfangskanal als bevorzugter Empfangskanal gewählt wird.

3. Anordnung nach Anspruch 1 oder 2, die ferner eingerichtet ist vermittels eines (Rück-)Kanals vom Empfängersystem zum sendenden Funksystem Informationen über eine Kanalbelegung und/oder Kanal(aus-)wahl im Empfängersystem an das Funksystem zu übermitteln.

4. Anordnung nach einem der Ansprüche 1 bis 3, die ferner eingerichtet ist das Verfahren zu festen oder variablen Zeitpunkten wiederholt durchzuführen.

5. Anordnung nach einem der Ansprüche 1 bis 4, wobei das Empfängersystem ferner eingerichtet ist einzelne der Schritte a.) bis d.) zu unterschiedlichen Zeiten bzw. nach unterschiedlich langen Zeitabschnitten durchzuführen.

6. Anordnung nach einem der Ansprüche 1 bis 5, wobei das Empfängersystem aufweist:
- den Empfänger und eine Logikeinheit, wobei der Empfänger ausgebildet ist, gleichzeitig auf allen hinterlegten Empfangskanälen zu empfangen, oder
- zumindest zwei Empfänger und eine Logikeinheit, wobei jeweils einem Empfangskanal der hinterlegten Empfangskanäle jeweils ein Empfänger zugeordnet ist, der diesen Empfangskanal abhört.

7. Anordnung nach einem der Ansprüche 1 bis 6, wobei der des Empfängersystems eingerichtet ist, ein Verfahren mit den folgenden Schritten durchzuführen:
c.) Ermitteln einer statistischen Belegwahrscheinlichkeit der hinterlegten Empfangskanäle anhand eines wiederholten Prüfens eines Empfangssignalpegels eines jeden hinterlegten Empfangskanals,
d.) Auswahl eines hinterlegten Empfangskanals mit der niedrigsten Belegwahrscheinlichkeit als bevorzugter Empfangskanal.
